# EUROPEAN PATENT APPLICATION

(11) **EP 4 167 115 A1**
(43) Date of publication of application: **19.04.2023**
(21) Application number: 21213240.1
(22) Date of filing: 08.12.2021
(51) Int. Cl.: G06F 21/60, G05B 19/042, G06F 21/73, G06F 21/85, H04W 12/08, H04W 4/38, H04W 4/70, H04W 12/04, H04W 12/06

(54) **SECURITY MODULE FOR A FIELD DEVICE**

(30) Priority: 18.10.2021 EP 21203240
(71) Applicant: ABB SCHWEIZ AG, 5400 Baden (CH)
(72) Inventor: FINSTER, Soeren, 76139 Karlsruhe (DE); MENDOZA, Francisco, 69198 Schriesheim (DE); KOHNHAEUSER, Florian, 64560 Riedstadt (DE)
(74) Representative: Maiwald GmbH

(57) **Abstract**

A security module (10, 21, 30, 40) for a field device (22) for providing security functions, comprising: a software interface (12) configured to provide a software coupling for data communication with the field device (22); a processing unit (11) configured to provide at least one security function via the software interface (12) for the field device (22).

## Description

### FIELD OF INVENTION

The present invention relates to a security module for a field device for providing security functions and a field system.

### BACKGROUND OF THE INVENTION

Industrial devices, in particular field devices, often consist of resource-constrained embedded systems that lack the computational power and capabilities to implement certain security functions. For this reason, industrial devices commonly contain specialized security hardware, which is tightly coupled into the hardware and software design of the device itself. Such security hardware is responsible, among other things, for securely storing cryptographic material like private keys and/or accelerating cryptographic operations.

Due to compliance to evolving cyber security requirements for industrial devices throughout their product lifetime, security modules for field devices are needed.

### SUMMARY OF THE INVENTION

In view of the above, it is an object of the present invention to provide a security module for a field device. In particular, it is an object of the present invention to provide an improved security module for a field device. These and other objects, which become apparent upon reading the following description, are solved by the subject matter of the independent claims. The dependent claims refer to preferred embodiments of the invention.

In one aspect, a security module for a field device for providing security functions is provided, comprising: a software interface configured to provide a software coupling for data communication with the field device; a processing unit configured to provide at least one security function via the software interface for the field device.

In an embodiment, the software interface may be an application programmable interface.

In an embodiment, the security module may further comprise a hardware interface configured to provide a hardware coupling with the field device.

In an embodiment, the security function may be an encapsulation of identity data of the field device.

In an embodiment, the security function may be an encapsulation of configuration data of the field device.

In an embodiment, the security function may be a cryptographic algorithm and/or a secure key storage.

In an embodiment, the software coupling and/or the hardware coupling with the field device may be configured to be established subsequently.

In an embodiment, the software coupling and/or a hardware coupling with the field device may be configured to be unlinked.

In an embodiment, the security module may further comprise a hardware query interface configured to query a permission for the software coupling and/or for an unlinking of the software coupling.

In an embodiment, the security module may further comprise a migration unit configured to receive configuration data of a field device and/or an identity of a field device from a second security module to be replaced, wherein the migration unit and the security module are provided as separate hardware parts or as an integral part.

In an embodiment, the processing unit may be configured to detect an unauthorized removal of the security module from the field device and to employ an alert function.

A further aspect of the present disclosure relates to a field system, comprising: a security module as described above; a field device.

In an embodiment, the field system is provided, wherein the field device may comprise an interface for a communication with a network.

In an embodiment, the field system is provided, wherein the security module may be plugged in the field device and may be non-destructively detachable from the field device.

A further aspect relates to a use of a migration unit for receiving configuration data of a field device and/or an identity of a field device from a second security module to be replaced in a security module as described above.

### DEFINITIONS

The term field device is to be understood broadly in the present disclosure and relates to any mechatronic device configured to measure a process variable in a process or a system and/or configured to control a process in a system. The field device may be a measuring device such as a fill level sensor. The field device may be an actuator such as pneumatic actuator. The field device may comprise a hardware interface configured to be connected with the security module. The field device may comprise a software interface configured to be connected with the security module. The field device may comprise a network interface configured to be connected with a network (e.g., via 4..20mA/HART, fieldbus, WHART, BLE, 4G, 5G, WLAN, Ethernet, Ethernet-APL, local area network (LAN), a wide area network (WAN), or combinations thereof).

The term security function is to be understood broadly and relates to any feature configured to provide a secure environment to a field device and/or a secure operation of the field device. The processing unit of the security module may provide several security functions. The security function may comprise a firewall, a cryptographic algorithm, encapsulation of data (e.g. identity data of the field device, configuration data of the field device, private key). The security function is provided from the processing unit to the field device.

The term processing unit is to be understood broadly and particularly refers to a hardware device that control the provision of the security functions to the field device. The hardware device may be a single entity or distributed on several entities. The hardware device may be implemented using processing circuitry such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner. The processing unit may have one or more interface circuits. The processing unit may have one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof. The processing unit may have a wired or wireless interface for communicating with the field device via the software interface.

The term software interface is to be understood broadly and refers to a digital connection between the security module and the field device for offering services such as the security functions.

The term application programmable interface (API) is to be understood broadly and refers to a programmable interface configured to exchange information between application and individual program parts in a standardised manner. The transfer of data and commands is structured according to a previously defined syntax. This may advantageously enable to modularise and thus simplify programming. This may advantageously enable to outsource one or more security functions to program modules of the security module. The API may be a function-oriented API, a file-oriented API, an object-oriented API or a protocol-oriented API.

The term software coupling as used herein is to be understood broadly and relates to a digital coupling between the security module and the field device. The software coupling refers in particular to a secure coupling between the security module and the field device.

The term hardware interface is to be understood broadly and refers in particular to a computer hardware interface. The hardware interface may be one of the following, but not limited: UART, SPI, USB, and FireWire. The hardware interface may a proprietary interface or a non-standardized interface.

The term identity data is to be understood broadly and refers to any data indicative for the field device. The identity data may comprise a type of the field device, an area of the field device, a time of implementation of the field device, a specific identity number of the field device, a private key or the like.

The term configuration data is to be understood broadly and refers to any data indicative for operating the field device. The configuration data may comprise operating parameter, maintenance data or the like.

The term cryptographic algorithm is to be understood broadly and refers to any algorithm configured to encode data. The cryptographic algorithm may be, but not limited, one of the following Advanced Encryption Standard (AES), BlowFish, AxCrypt, NordLocker, RSA, Elgamal, Elliptic Curve Cryptography, SHA, MD5. This may be advantageous as it increases the data security.

The term hardware query interface is to be understood broadly and refers to any interface configured to receive input data from a user. The hardware query interface may be touch display or the like. The hardware query interface may be an integral part of the security module or distributed on another entity.

The term migration unit is to be understood broadly and relates any hardware or software configured to receive configuration data and/or identity data from a security module to be replaced. The migration unit may be implemented in a processor, a CPU, a FGPA, a microcontroller. The migration unit may be a single entity or distributed on several entities. The migration unit may have an interface for data exchange (e.g. configuration data, identity data). The migration unit may be an integral part of the security module or distributed on another entity. The migration unit may also be used to generate a backup of a security module.

The term alert function is to be understood broadly and relates to a hardware function or software function configured to react on unauthorized removal of the security module. The alert function may comprise, but not limited, one of the following command for power switch off for the field device, transmitting of an alert message, a horn that raises an alarm on unauthorized removal.

Any disclosure and embodiments described herein relate to the module and system lined out above and vice versa. Advantageously, the benefits provided by any of the embodiments and examples equally apply to all other embodiments and examples and vice versa.

### BRIEF DESCRIPTION OF THE DRAWINGS

In the following, the present disclosure is described exemplarily with reference to the enclosed figures, in which

### DETAILED DESCRIPTION OF EMBODIMENTS

- **Figure 1**: shows a schematic illustration of an example security module for a field device for providing security functions;
- **Figure 2**: shows a schematic illustration of an example field system;
- **Figure 3**: shows a schematic illustration of an example security module according to a further embodiment; and
- **Figure 4**: shows a schematic illustration an example security module according to a further embodiment.

### DETAILED DESCRIPTION OF EMBODIMENTS

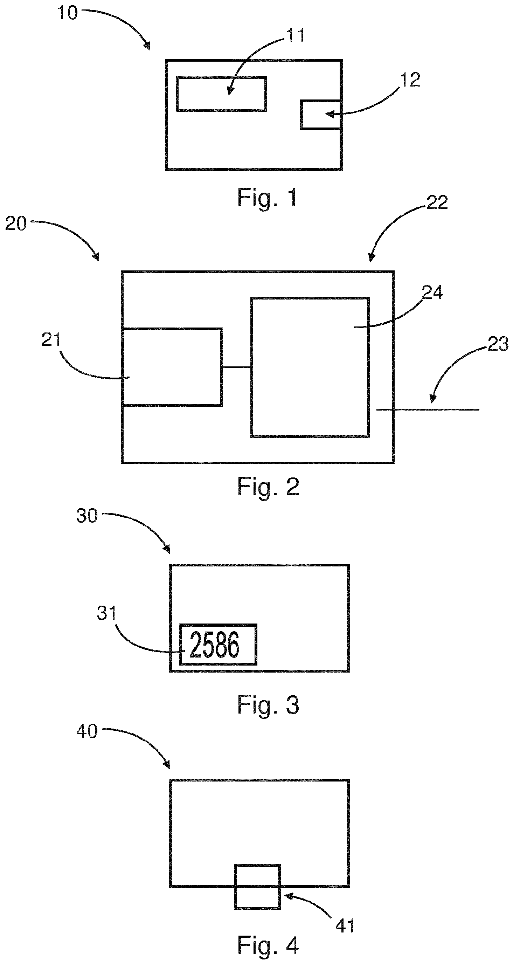

Figure 1 shows a schematic illustration of an example security module 10 for a field device (not shown) for providing security functions. The security module 10 comprises a software interface 12 configured to provide a software coupling for data communication with the field device. The security module 10 comprises further a processing unit 11 configured to provide at least one security function via the software interface for the field device. The software interface may be an application programmable interface. The application programmable interface (API) may be a function-oriented API. Alternatively, the API may be a file-oriented API, an object-oriented API or a protocol-oriented API. The API may comprise a tight coupling to the field device. Alternatively, the API may comprise a loose coupling to the field device. The security function is in the present example an encapsulation of identity data of the field device. Alternatively, the security function may not be limited to the one mentioned before and may further have several security functions, e.g. encapsulation of configuration data of the field device or a cryptographic algorithm. The software interface 12 may be implemented in a hardware interface, such as a serial interface between the security module and the field device. The software interface 12 may be implemented wirelessly via a wireless network between the security module and the field module. The software coupling may be established subsequently with the filed device. The security module may be plugged in to the field device.

Figure 2 shows a schematic illustration of an example field system 20. The field system 20 comprise a security module 21 as described in Figure 1. The field system 20 comprises further a field device 22. The field device 22 comprises a hardware and software unit 24. The field device 22 is in the present example a measuring device (e.g. fill level measuring device). The field device 22 may comprise a network interface 23 (e.g. an Ethernet interface). The security module 21 may be plugged in to the field device 22. The field device 21 may be non-destructively detachable from the field device 22.

Figure 3 shows a schematic example illustration of an example security module 30. In comparison to the security module 10 described in Figure 1 the security module 30 comprises a hardware query interface 31 configured to query a permission for the software coupling and/or an unlinking of the software coupling. The hardware query interface 31 is in the present example realized by a touch display that serves as a user interface for inputting an authorization code. Alternatively, the hardware query interface 31 may be a wireless interface (e.g. NFC interface) configured to input an authorization code.

Figure 4 shows a schematic example illustration of a security module 40. In comparison to the security module 10 described in Figure 1 or to the security module 30 described in Figure 3, the security module 40 comprises a migration unit 41 configured to receive configuration data of a field device and/or an identity of a field device from a second security module to be replaced. Alternatively, the migration unit and the security module may be provided as separate hardware parts. The migration unit 41 may have an interface for data exchange (e.g. configuration data, identity data).

In the following, a summary of the main effects and main advantages of the present disclosure is provided:

On resource-constrained field devices, special hardware is typically needed for security functions. Whereas the lifetime of field devices is often measured in decades, security functions become deprecated and superseded often after a couple of years. Thus, field devices exceed the lifetime of security functions, rendering them someday incapable of performing adequate security and need costly replacement.

This invention presents a security module that may be tightly coupled through software and/or a hardware to a field device. The security module may provide secure storage for a cryptographic key, a cryptographic algorithm, configuration data of the field device, identity data of the field device, and/or an acceleration for cryptographic operations. The field device coupling can be securely unlinked with special permissions, so that a security module can be migrated to a new field device. This may enable fast and cost-efficient field device replacement scenarios. In addition, the contents of a security module may be securely migrated to a new security module when necessary. This way, a security module can be upgraded and replaced.

The security module may be pluggable to the field device. The security module may encapsulate a field device identity, a field device configuration, cryptographic capabilities and security-related software functions. The security module may bound to a field device. With special permissions, the binding may be unlinked. By employing a secure linking and unlinking procedure, a security module may not only enable new scenarios, it also may provide for authenticating, authorizing, auditing and/or logging of security relevant actions.

The security module may be used to upgrade field devices with new security capabilities using a new security module. In this case, the security module attached to a field device may securely unlinked. The contents of the security module may securely be transferred to a new security module, which then may be installed. This may be a cost-efficient way to upgraded security because a security module is a relatively cheap in comparison to an entire field device.

The security module may be used for cost-efficient and easy field device replacement scenarios. Here, a security module may be removed from one field device and put into operation in another new field device. Since a security module may not only implement security features, but also may store the field device configuration data and customer-facing identity data, this may allow the new field device to quickly take over the function of the replaced field device.

Existing works target bump-in-the-wire (BITW) solutions. BITW solutions are for legacy devices without secure communication. They are attached to the network interface of a device where they transform insecure network messages into secure ones. In contrast to a bump-in-the-wire solution, the security module may not be attached to a network interface of the field device. Thus, the security module can be used for all communication technologies, including wireless.

A security module may tightly be coupled with a field device using a software binding and optionally also a hardware binding. Existing works only may only rely on a hardware binding. Using an additional software binding may increase security in cases where an attacker may find a way to bypass the hardware protection.

The security module may be located inside a field device casing. This may protect the security module from accidental removal and environmental disturbances, e.g., dust or water disrupting the connection between security module and the field device. However, with proper tools, the security module can be removed and replaced. For this purpose, the security module may be located under a hatch that can be opened with a specific tool. The security module and the field device may detect removal and employ security functions if the removal was not authorized properly.

A security module may be connected to one of the traditional components of a field device, e.g., a top-works that may provide, among other things, the communication capabilities of the field device. The traditional hardware components of a device may typically be dimensioned for a non-security purpose, e.g., providing only the communication capabilities, and may not be designed to be upgraded during the field device lifecycle. On the other hand, the security module may specifically be designed to store the device configuration data as well as device identity data and may provide security functions (i.e. features) like fast cryptographic operations and a secure key storage. Field device identity data may not necessarily be provided exclusively by the security module. In fact, there may be multiple possibilities to implement device identity data, e.g., only the security module may store and may provide the field device identity data, the traditional components (i.e., top-works and bottom-works) may store and provide the identity data, or both security module and traditional components may store parts of the field device identity data that in conjunction may represent final field device identity data. To make use of the security module, traditional components may use an API provided by the security module via the connection to the security module.

To prevent an adversary from removing and misusing a security module, the security module may be tightly bound to the field device by software and optionally also by hardware. Nevertheless, the field device binding can be unlinked with special permission. For instance, this unlink feature can be provided by a hardware query interface. The hardware query interface may require entering credentials to authorize the unlinking of the security module. In addition, the hardware query interface may require Internet access to verify whether the tool and user may be authorized to perform the unlinking, and to perform auxiliary operations that may facilitate the unlinking process. After unlinking, the security module can be used in another device, where it may establish a new coupling with the field device. This way, the identity data can be transferred from one field device to another. This may be useful to save time and cost in case the original field device breaks, since this way a recommissioning and re provisioning of the new field device may not necessary anymore. In the same manner, a migration unit can also enable the security module itself to be migrated to a new field device. This may allow the security module to be upgraded and replaced. For instance, this may be necessary if new cryptographic algorithms need to be supported that cannot be realized with the current security module and field device. The migration unit may transform the configuration data of the old security module to the new security module, after migration unit and user have been successfully authorized. Afterwards, the new security module may be inserted into the field device, which may enable the field device to perform novel security functions. To access those novel functions, the field device might need a software upgrade.

The security module may be relatively cheap in comparison to an entire field device. The security module may provide a secure key storage. The security module may be a performant crypto module. The security module may be designed for upgrade scenarios and/or replacement scenarios. The security module may be a part of the of the field device casing, but may be removable with tools.

The software interface of the field device may be a software coupling that can be unlinked with special permissions.

The security module may have optionally a hardware interface to the field device.

The field device and security module may recognize disconnect and take actions.

The API of the security module may be the top works of the field device.

The present disclosure has been described in conjunction with a preferred embodiment as examples as well. However, other variations can be understood and effected by those persons skilled in the art and practicing the claimed invention, from the studies of the drawings, this disclosure and the claims.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### REFERENCE SIGNS

- 10, 21, 30, 40: security module
- 11: processing unit
- 12: software interface
- 20: field system
- 22: field device
- 23: network interface
- 24: field device hardware and software
- 31: hardware query interface
- 41: migration unit

## Claims

1. A security module (10, 21, 30, 40) for a field device (22) for providing security functions, comprising:
a software interface (12) configured to provide a software coupling for data communication with the field device (22);
a processing unit (11) configured to provide at least one security function via the software interface (12) for the field device (22).

2. The security module (10, 21, 30, 40) according to claim 1, wherein the software interface (12) is an application programmable interface.

3. The security module (10, 21, 30, 40) according to claim 1 or 2, further comprising a hardware interface (13) configured to provide a hardware coupling with the field device (22).

4. The security module (10, 21, 30, 40) according to any one of the preceding claims, wherein the security function is an encapsulation of identity data of the field device (22).

5. The security module (10, 21, 30, 40) according to any one of the preceding claims, wherein the security function is an encapsulation of configuration data of the field device (22).

6. The security module (10, 21, 30, 40) according to any one of the preceding claims, wherein the security function is a cryptographic algorithm and/or a secure key storage.

7. The security module (10, 21, 30, 40) according to any one of the preceding claims, wherein the software coupling and/or a hardware coupling with the field device (22) are configured to be established subsequently.

8. The security module (10, 21, 30, 40) according to any one of the preceding claims, wherein the software coupling and/or a hardware coupling with the field device (22) are configured to be unlinked.

9. The security module (10, 21, 30, 40) according to any one of the preceding claims, further comprising a hardware query interface (31) configured to query a permission for the software coupling and/or for an unlinking of the software coupling.

10. The security module (10, 21, 30, 40) according to any one of the preceding claims, further comprising a migration unit (41) configured to receive configuration data of a field device (22) and/or an identity of a field device (22) from a second security module (10, 21, 30, 40) to be replaced, wherein the migration unit and the security module are provided as separate hardware parts or as an integral part.

11. The security module (10, 21, 30, 40) according to any one of the preceding claims, wherein the processing unit (11) is configured to detect an unauthorized removal of the security module (10, 21, 30, 40) from the field device (22) and to employ an alert function.

12. A field system (20), comprising:
a security module (10, 21, 30, 40) according to any one of the claims 1 to 12;
a field device (22).

13. The field system (20) according to claim 13, wherein the field device (22) comprises a network interface (23) for a communication with a network.

14. The field system (20) according to claim 13 or 14, wherein in the security module (10, 21, 30, 40) is plugged in the field device (22) and is non-destructively detachable from the field device (22).

15. Use of a migration unit for receiving configuration data of a field device (22) and/or an identity of a field device (22) from a second security module (10, 21, 30, 40) to be replaced in a security module (10, 21, 30, 40) according to any one of the claims 1 to 12.
